(19)

Europäisches Patentamt

European Patent Office

Office européen des brevets

(11) **EP 4 396 709 B1**

(12) **EUROPEAN PATENT SPECIFICATION**

(45) Date of publication and mention of the grant of the patent:
**30.07.2025  Bulletin 2025/31**

(21) Application number: **21786179.8**

(22) Date of filing: **29.09.2021**

(51) International Patent Classification (IPC):
*H04L 9/40* ^(2022.01)    *G06F 21/53* ^(2013.01)

(52) Cooperative Patent Classification (CPC):
**G06F 21/53; H04L 63/1491**

(86) International application number:
**PCT/EP2021/076753**

(87) International publication number:
**WO 2023/051901 (06.04.2023 Gazette 2023/14)**

(54) **HONEYPOT ENTITY AND METHOD OF OPERATING THE SAME**

HONIGTOPFEINHEIT UND VERFAHREN ZUM BETRIEB DAVON

ENTITÉ POT DE MIEL ET PROCÉDÉ DE FONCTIONNEMENT DE CELLE-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**10.07.2024  Bulletin 2024/28**

(73) Proprietors:
• **Huawei Technologies Co., Ltd.**
  **Shenzhen, Guangdong 518129 (CN)**
• **Politecnico Di Torino**
  **10129 Torino (IT)**

(72) Inventors:
• **DEL SORDO, Lorenzo**
  **10129 Torino (IT)**
• **MILAN, Giulia**
  **10129 Torino (IT)**

• **VASSIO, Luca**
  **10129 Torino (IT)**
• **MELLIA, Marco**
  **10129 Torino (IT)**
• **DRAGO, Idilio**
  **10129 Torino (IT)**
• **BEN HOUIDI, Zied**
  **80992 Munich (DE)**
• **ROSSI, Dario**
  **80992 Munich (DE)**

(74) Representative: **Roth, Sebastian**
  **Mitscherlich PartmbB**
  **Patent- und Rechtsanwälte**
  **Karlstraße 7**
  **80333 München (DE)**

(56) References cited:
  **CN-A- 109 831 447    CN-A- 111 079 932**

**Description**

**TECHNICAL FIELD**

The present disclosure relates generally to the field of IT/network security, and more particularly to a honeypot entity, a method of operating the same, and a corresponding computer program.

**BACKGROUND**

Honeypots may relate to computer systems acting as active probes which respond to incoming traffic so as to pretend a vulnerable service, either by fake systems (low-interaction honeypots) or by real systems (high-interaction honeypots). From such interaction, threat intelligence, i.e., information about attackers and attacks, may be derived, which may help in the design of security strategies to protect systems against new exploits in a timely fashion.

High-interaction honeypots are hard to be deployed, costly and risky since they expose a real system left to be abused and that can easily get out of control. Moreover, instrumenting high-interaction honeypots to backtrack attacks is very hard, in particular for zero-day exploits.

Low-interaction honeypots simulate or emulate a server and allow one to study intrusion attempts. However, low-interaction honeypots only simulate real systems. If the simulation does not include a possible subsystem, the low-interaction honeypot fails to engage with the attackers that will abandon their attack. For instance, attackers looking for systems with GPU support for installing a bitcoin miner would abandon the attack if the honeypot replies that there is no GPU in the emulated system.

Millions of attacks and thousands of attackers may be seen per day and per honeypot, including highly automated bot attacks and zero-day attacks. As such, interaction with attackers must be automated and adaptive to different attack patterns, including new ones. The document CN 109 831 447, 31st May 2019 (2019-05-31), discloses an intelligent honey net system based on an NFV (Network Function Virtualization). The document CN 111 079 932, 28th April 2020 (2020-04-28), discloses an intelligent honeypot system based on reward feedback.

**SUMMARY**

It is an object to overcome these and other drawbacks.

The foregoing and other objects are achieved by the features of the independent claims. Further implementation forms are apparent from the dependent claims, the description and the figures.

According to a first aspect, a honeypot entity is provided. The honeypot entity is configured to: receive a command of a user; and determine if an assessment of the received command is required. The honeypot entity is further configured to, if the assessment of the received command is required: arrange for execution of the received command by a number of controlled backend systems; retrieve a first set of command outputs associated with the forwarded command from the backend systems; and populate a knowledge base with an entry including the received command and the retrieved first set of command outputs. The honeypot entity is further configured to: retrieve a second set of command outputs associated with the received command from the knowledge base; select a command output of the retrieved second set of command outputs in dependence of a policy which seeks to maximise a value function; output the selected command output to the user; determine an immediate reward associated with the selected command output; and adapt the policy in dependence of an interaction history associated with the user, the selected command output and the immediate reward.

This provides a system that interacts as long as possible with attackers, using an action-selection policy for selection of known responses from the knowledge base in the manner of low-interaction honeypots, and populating the knowledge base with new responses to unknown commands in the style of high-interaction honeypots, using the backend systems. As such, the honeypot entity merges the best of low-interaction honeypots, such as their lightweightness, and high-interaction honeypots, such as their expressivity and realism, and thereby allowing safer and richer interactions with attackers. Even more, the system may evolve with real-time interactions including attacks on real backend systems that support the learning. More interaction means that security analysts have higher chances to obtain information about attacks. The derived threat intelligence information is learned automatically and can help in the design of security strategies to protect systems against new exploits in a timely fashion.

In a possible implementation form, the honeypot entity may further be configured to: adapt the policy based on reinforcement learning.

Reinforcement learning (RL) may refer to a machine learning paradigms which is distinguished by not needing labelled input/output pairs be presented, and not needing sub-optimal actions to be explicitly corrected. As such, RL implies low implementation and operation efforts. RL involves an agent, a set S of states, and a set A of actions per state. By performing an action $a \in A$, the agent transitions between states $s, s' \in S$. Executing an action in a specific state provides the agent with an immediate reward r (a numerical score). The goal of the agent is to maximize its total reward. RL enables an agent to learn an optimal, or nearly-optimal, action-selection policy which maximizes a value function that accumulates from the immediate rewards of the actions taken.

In a possible implementation form, the reinforcement learning may comprise Q-learning.

Q-learning may refer to a RL algorithm which is distinguished by not requiring a model of the environment, and which is used to learn the value of an action in a particular state of the environment (expressed as the expected value of the total reward following said action). As such, Q-learning implies a low implementation effort. In accordance with Q-learning, the agent maximizes its total reward by adding a maximum reward attainable from future states to the reward for achieving its current state, effectively influencing the current action by the potential future reward.

In a possible implementation form, the policy may define an expected value of a total reward for the selected command output given the interaction history associated with the user; and the value function may comprise a sum of immediate rewards associated with the interaction history.

In a possible implementation form, the honeypot entity may further be configured to, so as to adapt the policy: update the expected value of the total reward for the selected command output in dependence of the interaction history, the selected command output, and the immediate reward.

In a possible implementation form, the interaction history may comprise one or more most recent received commands associated with the user.

This may define an inelaborate set S of states.

In a possible implementation form, the interaction history may comprise the one or more most recent commands associated with the user and respective selected command outputs.

This may define an elaborate set S of states.

In a possible implementation form, the immediate reward may comprise at least one of: a negative first value upon discontinued interaction with the user; a positive second value upon continued interaction with the user; and a positive third value if the received command is not included in the knowledge base.

This may facilitate attaining as much threat intelligence as possible, by rewarding interaction with the user and/or learning new commands.

In a possible implementation form, the command assessment may be required if the received command is not included in the knowledge base.

This may yield new responses when no responses are available.

In a possible implementation form, the command assessment may be required if the received command is not associated with at least one command output for which the reward is in excess of a threshold.

This may yield new responses when available responses provide no satisfactory reward.

In a possible implementation form, the command assessment may be required if the at least one associated command output requires a refresh in accordance with a refresh probability.

This may implement a probabilistic forwarding of received commands to backend systems so as to refresh the knowledge base.

In a possible implementation form, the honeypot entity may further be configured to, so as to arrange for execution of the received command: classify the received command; and arrange for execution of the received command by the number of controlled backend systems in accordance with the classification.

This may enhance a fit of the command outputs received from the backend systems by learning which backend systems should be used for respective attacks/commands.

In a possible implementation form, the honeypot entity may further be configured to, so as to classify the received command: classify the received command into one or more of: a command of a UNIX computer system; a command of a Windows computer system; a command of a network routing system; and a command of an Internet of Things, IoT, device.

This may specifically enhance a fit of the command outputs received from UNIX, Windows, network routing and/or IoT-based backend systems.

In a possible implementation form, the honeypot entity may further be configured to: suggest enhancing a functionality of the number of controlled backend systems responsive to the retrieved first set of command outputs comprising zero command outputs.

This may enhance the controlled backend by augmenting their capabilities when appropriate responses are missing.

According to a second aspect, a method of operating a honeypot entity is provided. The method comprises: receiving a command of a user; and determining if an assessment of the received command is required. The method further comprises, if the assessment of the received command is required: arranging for execution of the received command by a number of controlled backend systems; retrieving a first set of command outputs associated with the forwarded command from the backend systems; and populating a knowledge base with an entry including the received command and the retrieved first set of command outputs. The method further comprises: retrieving a second set of command outputs associated with the received command from the knowledge base; selecting a command output of the retrieved second set of command outputs in dependence of a policy which seeks to maximise a value function; outputting the selected command output to the user; determining an immediate reward for the selected command output; and adapting the policy in dependence of an interaction history associated with the user, the selected command output and the immediate reward.

According to a third aspect, a computer program is provided. The computer program comprises executable instructions which, when executed by a processor, cause the processor to perform the method of the second aspect or any of its implementations.

Advantageously, the technical effects and advantages described above in relation with the honeypot entity according to the first aspect equally apply to the method according to the second aspect of operating the same having corresponding features, as well as to the computer program according to the third aspect.

## BRIEF DESCRIPTION OF DRAWINGS

The above-described aspects and implementations will now be explained with reference to the accompanying drawings, in which the same or similar reference numerals designate the same or similar elements.

The drawings are to be regarded as being schematic representations, and elements illustrated in the drawings are not necessarily shown to scale. Rather, the various elements are represented such that their function and general purpose become apparent to those skilled in the art.

FIG. 1    illustrates a honeypot entity and a method of operating the same, both in accordance with the present disclosure; and

FIG. 2    illustrates a honeypot entity and a method, both in accordance with the present disclosure, wherein the honeypot entity includes a learner entity and an explorer entity to which the steps of the method are assigned accordingly.

## DETAILED DESCRIPTIONS OF EMBODIMENTS

In the following description, reference is made to the accompanying drawings, which form part of the disclosure, and which show, by way of illustration, specific aspects of embodiments of the invention or specific aspects in which embodiments of the present invention may be used. It is understood that embodiments of the invention may be used in other aspects and comprise structural or logical changes not depicted in the figures. The following detailed description, therefore, is not to be taken in a limiting sense, and the scope of this disclosure is defined by the appended claims.

For instance, it is understood that a disclosure in connection with a described method may also hold true for a corresponding apparatus or system configured to perform the method and vice versa. For example, if one or a plurality of specific method steps are described, a corresponding device may include one or a plurality of units, e.g. functional units, to perform the described one or plurality of method steps (e.g. one unit performing the one or plurality of steps, or a plurality of units each performing one or more of the plurality of steps), even if such one or more units are not explicitly described or illustrated in the figures. On the other hand, for example, if a specific apparatus is described based on one or a plurality of units, e.g. functional units, a corresponding method may include one step to perform the functionality of the one or plurality of units (e.g. one step performing the functionality of the one or plurality of units, or a plurality of steps each performing the functionality of one or more of the plurality of units), even if such one or plurality of steps are not explicitly described or illustrated in the figures. Further, it is understood that the features of the various exemplary embodiments and/or aspects described herein may be combined with each other, unless specifically noted otherwise.

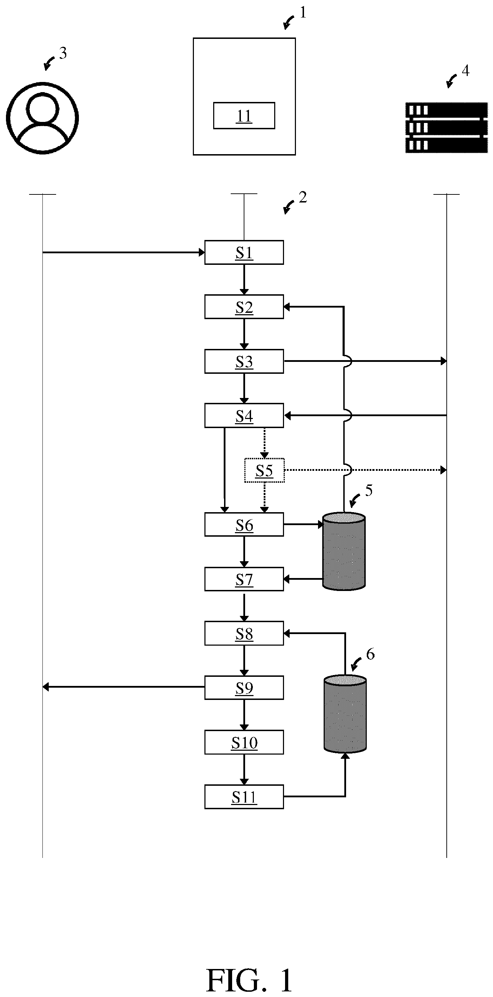

FIG. 1 schematically illustrates a honeypot entity 1 and a method 2 of operating the same, both in accordance with the present disclosure, framed by a user 3 on the left and a number of controlled backend systems 4 on the right.

As such, FIG. 1 shows entities 1, 3, and 4 on top of a flow diagram relating to the method 2. In the flow diagram, vertical arrows between blocks denote program flow within an entity, whereas horizontal arrows stand for information flow within or between entities.

FIG. 1 shows that the honeypot entity 1 comprises a processor 11. Execution of instructions of an appropriate computer program causes the processor 110 to perform the method 2. That is to say, the honeypot entity 1 and the method 2 of operating the honeypot entity 1 have corresponding features. As such, only the honeypot entity 1 will be described in more detail in the following.

The honeypot entity 1 is configured to: receive S1 a command of a user 3 (see inbound arrow at block S1). In particular, the command may be received by / via a frontend which represents the interface exposed to attackers. The frontend may be based on frameworks providing the protocols and online systems usually abused by attackers, such as Telnet, SSH, HTTP, SQL databases, IoT devices, and Windows systems, to name a few. For example, the Cowrie SSH and Telnet Honeypot (www.cowrie.org) exposing SSH and Telnet proxy functionality may be deployed as a frontend. Keeping the frontend separate from the honeypot entity 1 decouples the honeypot entity 1 and the controlled backend systems 4 from actual attacks.

The honeypot entity 1 is further configured to: determine S2 if an assessment of the received command is required (see inbound arrow at block S2). This may involve inspecting a knowledge base 5 of the honeypot entity 1 for possible responses.

In a simple implementation, the knowledge base 5 may be a simple data storage structure that stores for each received command a list of possible responses (or answers, outputs) In other words, the knowledge base 5 may be seen as a dictionary of possible answers.

In more elaborate implementations, the knowledge base 5 may be distributed to replicate or share knowledge in a federated manner between different threat intelligence services (to mutualize the efforts and cost of deployment). By design, the knowledge base 5 supports multiple protocols at the same time, in accordance with support by the number of controlled backend systems 4. All data storage optimizations may be leveraged in the knowledge base 5, such as caching and pre-loading mechanisms to speed up convergence.

For example, the command assessment may be required if the received command is not included in the knowledge base 5. In other words, when no possible response is found in the knowledge base 5, it is required to explore the number of controlled backend systems 4 for possible responses.

For example, the command assessment may be required if the received command is not associated with at least one command output for which the reward is in excess of a threshold. That is to say, when the available responses provide no satisfactory reward, it is required to explore the number of controlled backend systems 4 for possible responses providing more satisfactory rewards.

For example, the command assessment may be required if the at least one associated command output requires a refresh in accordance with a refresh probability. Thus, even if the received command is included in the knowledge base 5 and is as well associated with at least one command output for which the reward is in excess of a threshold, the received command may nevertheless be forwarded to the controlled backend systems 4 in accordance with a given refresh probability so as to refresh the knowledge base.

If the assessment of the received command is required, the honeypot entity 1 is further configured to: arrange S3 for execution of the received command by the number of controlled backend systems 4 (see outbound arrow at block S3). One or more backend environments may be started via plugins that control the backend systems 4. For example, if a backend system 4 is operated as a virtual machine (VM), the application programming interface (API) of the underlying hypervisor is used to start VMs from saved snapshots. A status of the backend environment may also be recorded. That is to say, if a backend system 4 is a VM accessed via SSH, both the content of stderr and stdout of the SSH terminal session is recorded, as well as snapshots of the VM may be made to eventually reuse it - now potentially exploited - in future sessions.

Execution of the received commands in controlled backend environments enables the honeypot entity 1 to evolve with real-time interactions between the attackers and real systems, i.e., the backend systems 4, which act as controlled high-interaction honeypots. As its language may be augmented with new responses, the honeypot entity 1 is not limited to a particular list of responses. Thereby, new ways to speak with attackers may safely be learned, opening ways to the exploration of novel commands, regardless if the attacker is human or a script.

The honeypot entity 1 may further be configured to, so as to arrange S3 for execution of the received command: classify S31 the received command; and arrange S32 for execution of the received command by the number of controlled backend systems 4 in accordance with the classification.

According to a simple implementation, unknown commands may be executed on all backend systems 4 - some of which will fail, while some will return possible valid answers, with which the knowledge base 5 will be populated and updated. Thus, all unknown attack attempts observed by the honeypot entity 1 in the wild are automatically used in multiple backend systems 4 in a safe and controlled setup. Accordingly, the backend systems 4 may provide multiple plausible responses to previously unseen requests. According to a more elaborate implementation, the honeypot entity 1 may be configured to map the received commands to the appropriate backend, by means of classification, so as to improve a success rate of returning possible valid answers.

The honeypot entity 1 may further be configured to, so as to classify S31 the received command: classify S31 the received command into one or more of: a command of a UNIX computer system; a command of a Windows computer system; a command of a network routing system; and a command of an IoT device. Potentially any backend system 4 may be deployed provided that a plug-in implementing basic functionalities is available. The backend systems 4 may thus include systems and protocols of different families.

If the assessment of the received command is required, the honeypot entity 1 is further configured to: retrieve S4 a first set of command outputs associated with the received command from the backend systems 4 (see inbound arrow at block S4).

If the assessment of the received command is required, the honeypot entity 1 may further be configured to: suggest S5 enhancing a functionality of the number of controlled backend systems 4 responsive to the retrieved first set of command outputs comprising zero command outputs (see outbound arrow at block S5). As such, the honeypot entity 1 also applies some intelligence to decide whether the backends are effective, e.g., reporting cases whether all backends fail, thus contributing to the improvement of the system. In such a case, new backend systems or packages to install may be suggested, such as that the backend systems 4 may require a GPU installer since attackers are searching for GPU but there is no VM with GPU among the backend systems 4.

If the assessment of the received command is required, the honeypot entity 1 is further configured to: populate S6 the knowledge base 5 with an entry including the received command and the retrieved first set of command outputs (see outbound arrow at block S1). This may augment the repertoire of the honeypot system 1 with new responses. The new responses may not be available on time for responding to the received command, however, but for subsequent commands.

The honeypot entity 1 is further configured to: retrieve S7 a second set of command outputs associated with the received command from the knowledge base 5 (see inbound arrow at block S7).

The honeypot entity 1 is further configured to: select S8 a command output of the retrieved second set of command outputs in dependence of a policy 6 which seeks to maximise a value function (see inbound arrow at block S8).

In particular, the policy 6 may define an expected value of a total reward for the selected command output given an interaction history associated with the user 3.

In particular, the value function may comprise a sum of immediate rewards associated with the interaction history. Thus, maximising the value function thus defined implies maximising a total reward associated with the interaction history.

Using the result of RL for selection, the best response is chosen given the activity performed by the given attacker so far.

The response to be returned to attackers depends on expected rewards accumulated according to the policy 6, by picking in a given state the response with the highest expected reward (reflecting the highest probability of keeping the attacker in the system).

The interaction history (in RL terminology: state) may comprise one or more most recent received commands associated with the user 3, or the one or more most recent commands associated with the user 3 and respective selected command outputs. That is to say, different state definitions may be supported with respective complexity and performance. For example, if the interaction history comprises the last command only, a response is selected based on the last received command only. For example, if the interaction history comprises the last $k$ commands, a response is selected based on the sequence of past $k$ received commands. For example, if the interaction history comprises the last $k$ commands and responses, a response is selected based on the sequence of past $k$ received commands and the past selected $k - 1$ responses. As a simple alternative, the RL may be stateless.

The honeypot entity 1 is further configured to: output S9 the selected command output to the user 3 (see outbound arrow at block S9). It thus may send the selected response to the attacker via the frontend.

The honeypot entity 1 is further configured to: determine S10 the immediate reward associated with the selected command output. That is to say, it records the behaviour of the attacker after submitting the response.

The immediate reward may comprise at least one of: a negative first value upon discontinued interaction with the user 3; a positive second value upon continued interaction with the user 3; and a positive third value if the received command is not included in the knowledge base 5. As the response of the attacker may not be available immediately after submitting the response, the determining S10 may be performed upon availability of such response. For example, if the honeypot entity 1 fails to answer to the received command, the attacker may close the connection in a delayed manner. For example, if the honeypot entity 1 successfully answers to the received command and the attacker keeps interacting, this may ultimately be established when receiving a follow-up command only. For example, if the honeypot entity 1 fails to retrieve possible answers to the received command from the knowledge base 5, it may require some time for the backend systems 4 to provide them on demand. For method 2, this may imply execution of block S10 out-of-sequence, i.e., unlike indicated in FIG. 1.

The honeypot entity 1 is further configured to: adapt S11 the policy 6 in dependence of an interaction history associated with the user 3, the selected command output and the immediate reward (see outbound arrow at block S11).

The honeypot entity 1 may further be configured to: adapt S11 the policy 6 based on reinforcement learning (RL). RL usually involves an exploration phase in which responses to be sent to attackers are chosen at random. This breaks the determinism of returning always the same response, and thus allows for exploring and evaluating the impact of new responses.

In particular, the reinforcement learning may comprise Q-learning. Generally, various RL algorithms with respective complexity and performance may be deployed. Possible alternatives to Q-learning include Q-learning($\lambda$), SARSA, SARSA($\lambda$), deep reinforcement learning, which combines reinforcement learning and deep neural networks, or stochastic bandits, which just explores/exploits probabilistically without learning from a state.

Q-learning is an iterative training method configured to find an optimal policy 6 in the sense of maximizing the expected value of the total reward over any and all successive steps, starting from an initial state. More specifically, Q-learning computes a function $Q: S \times A \Rightarrow \mathbb{R}$ which reflects the respective expected reward for an action taken in a given state. In a simple implementation, Q may be organized as a table of the set S of states (rows) by the set A of actions (columns). Starting from a null matrix or other initial conditions, each table entry $Q(s_t, a_t)$ may be updated through Q-learning as follows:

$$Q(s_t, a_t)^{new} \leftarrow Q(s_t, a_t) + \alpha \cdot \left( r_t + \gamma \cdot \max_a Q(s_{t+1}, a) - Q(s_t, a_t) \right)$$

wherein

action $a_t \in A$ is selected situatively in state $s_t \in S$ at iteration/time $t$,
$\propto$ is a learning weight ($0 < \propto < 1$),
$r_t$ is the immediate reward obtained when taking action $a_t$ in state $s_t$ (and thus moving from state $s_t$ to state $s_{t+1}$),
$\gamma$ is a discount weight ($0 < \gamma < 1$), and

$$\max_a Q(s_{t+1}, a)$$

is the maximum reward obtainable in state $s_{t+1}$.

As a summary of the above, the honeypot entity 1 may further be configured to, so as to adapt S11 the policy 6: update S111 (not shown) the expected value of the total reward for the selected command output in dependence of the interaction history (i.e., state $s_{t+1}$), the selected command output (i.e., action $a_t$), and the immediate reward (i.e., reward $r_t$).

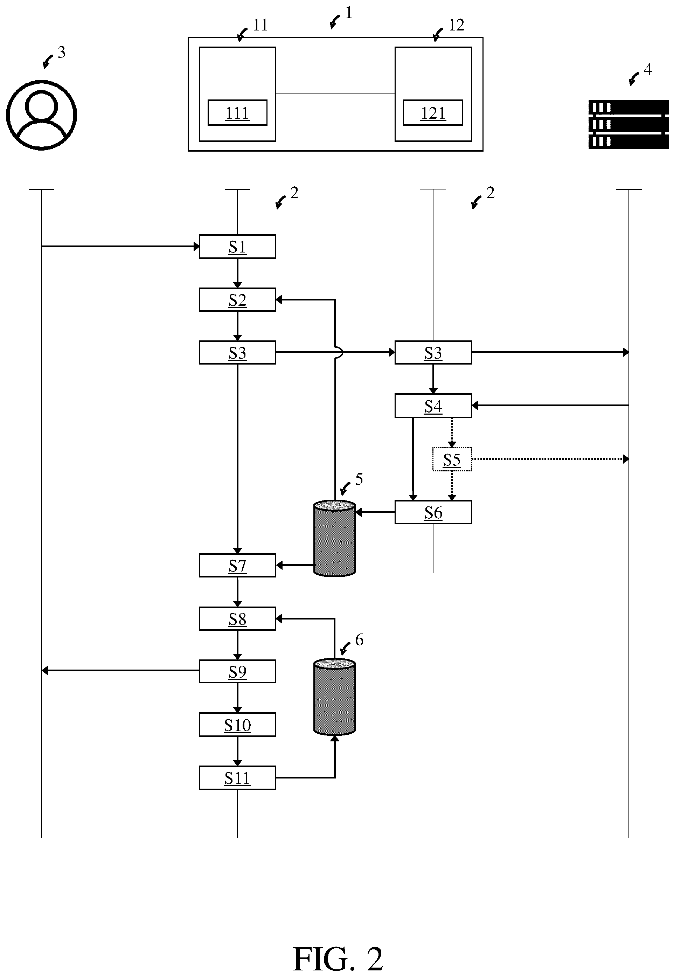

FIG. 2 schematically illustrates a honeypot entity 1 and a method 2, both in accordance with the present disclosure, framed by a user 3 on the left and a number of controlled backend systems 4 on the right.

Like before, FIG. 2 shows entities 1, 3, and 4 on top of a flow diagram relating to the method 2. In this implementation, the honeypot entity 1 includes a learner entity 11 and an explorer entity 12 to which the steps of the method 2 are assigned accordingly.

The learner entity 11 and the explorer entity 12 comprise respective processors 111 and 121, which may correspond to different time slices or processor cores of a same processor 110. Execution of instructions of appropriate computer programs causes the processors 111, 121 to perform the method 2.

Notably, the processor 121 of the explorer entity 12 is configured to perform all the steps of method 2 relating to exploring new ways of interaction with attackers, which ultimately populate the knowledge base 5, and the processor 111 of the learner entity 11 is configured to perform all the steps of method 2 relating to learning to choose a best response to an attack from the knowledge base 5.

As already mentioned in connection with FIG. 1, if the assessment of the received command is required, the honeypot entity 1 is further configured to: arrange S3 for execution of the received command by the number of controlled backend systems 4 (see outbound arrow at block S3).

In this implementation, both the learner entity 11 and the explorer entity 12 are conditionally configured to arrange S3 for execution of the received command: In the case of the learner entity 11 by forwarding the received command to the explorer entity 12 (see outbound arrow at block S3), and in case of the explorer entity 12 by: receiving the forwarded command from the learner entity 11 (see inbound arrow at block S3), and by starting one or more backend environments via plugins that control the backend systems 4. This may involve arranging S32 for execution of the received/forwarded command by the number of controlled backend systems 4 in accordance with a prior classification (see S31 above).

Other than that, the specification submitted in connection with FIG. 1 applies.

The present disclosure has been described in conjunction with various embodiments as examples as well as implementations. However, other variations can be understood and effected by those persons skilled in the art and practicing the claimed matter, from the studies of the drawings, this disclosure and the independent claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation. A computer program may be stored/distributed on a suitable medium, such as an optical storage medium or a solid-state medium supplied together with or as part of other hardware, but may also be distributed in other forms, such as via the Internet or other wired or wireless telecommunication systems.

**Claims**

1.  A honeypot entity (1),

    being configured to:

- receive (S1) a command of a user (3); and
- determine (S2) if an assessment of the received command is required;

the honeypot entity (1) further being configured to, if the assessment of the received command is required:

- arrange (S3) for execution of the received command by a number of controlled backend systems (4);
- retrieve (S4) a first set of command outputs associated with the received command from the backend systems (4); and
- populate (S6) a knowledge base (5) with an entry including the received command and the retrieved first set of command outputs; and

the honeypot entity (1) further being configured to:

- retrieve (S7) a second set of command outputs associated with the received command from the knowledge base (5);
- select (S8) a command output of the retrieved second set of command outputs in dependence of a policy (6) which seeks to maximise a value function;
- output (S9) the selected command output to the user (3);
- determine (S10) an immediate reward associated with the selected command output; and
- adapt (S11) the policy (6) in dependence of an interaction history associated with the user (3), the selected command output and the immediate reward.

2. The honeypot entity (1) of claim 1,
   further being configured to:

   - adapt (S11) the policy (6) based on reinforcement learning.

3. The honeypot entity (1) of claim 2,
   the reinforcement learning comprising Q-learning.

4. The honeypot entity (1) of any one of the preceding claims,

   the policy (6) defining an expected value of a total reward for the selected command output given the interaction history associated with the user (3); and
   the value function comprising a sum of immediate rewards associated with the interaction history.

5. The honeypot entity (1) of claim 4,
   further being configured to, so as to adapt (S11) the policy (6):

   - update (S111) the expected value of the total reward for the selected command output in dependence of the interaction history, the selected command output, and the immediate reward.

6. The honeypot entity (1) of any one of the preceding claims,
   the interaction history comprising one or more most recent received commands associated with the user (3).

7. The honeypot entity (1) of any one of the preceding claims,
   the immediate reward comprising at least one of:

   - a negative first value upon discontinued interaction with the user (3);
   - a positive second value upon continued interaction with the user (3); and
   - a positive third value if the received command is not included in the knowledge base (5).

8. The honeypot entity (1) of any one of the preceding claims,
   the command assessment being required if the received command is not included in the knowledge base (5).

9. The honeypot entity (1) of claim 8,
   the command assessment being required if the received command is not associated with at least one command output for which the reward is in excess of a threshold.

10. The honeypot entity (1) of claim 9,
the command assessment being required if the at least one associated command output requires a refresh in accordance with a refresh probability.

11. The honeypot entity (1) of any one of the preceding claims,
further being configured to, so as to arrange (S3) for execution of the received command:

   - classify (S31) the received command; and
   - arrange (S32) for execution of the received command by the number of controlled backend systems (4) in accordance with the classification.

12. The honeypot entity (1) of claim 11,
further being configured to, so as to classify (S31) the received command:

   - classify (S31) the received command into one or more of:
   - a command of a UNIX computer system;
   - a command of a Windows computer system;
   - a command of a network routing system; and
   - a command of an IoT device.

13. The honeypot entity (1) of any one of the preceding claims,
further being configured to:

   - suggest (S5) enhancing a functionality of the number of controlled backend systems (4) responsive to the retrieved first set of command outputs comprising zero command outputs.

14. A method (2) of operating a honeypot entity (1),

   the method (2) comprising:

      - receiving (S1) a command of a user (3); and
      - determining (S2) if an assessment of the received command is required;

   the method (2) further comprising, if the assessment of the received command is required:

      - arranging (S3) for execution of the received command by a number of controlled backend systems (4);
      - retrieving (S4) a first set of command outputs associated with the received command from the backend systems (4); and
      - populating (S6) a knowledge base (5) with an entry including the received command and the retrieved first set of command outputs;

   the method (2) further comprising:

      - retrieving (S7) a second set of command outputs associated with the received command from the knowledge base (5);
      - selecting (S8) a command output of the retrieved second set of command outputs in dependence of a policy (6) which seeks to maximise a value function;
      - outputting (S9) the selected command output to the user (3);
      - determining (S10) an immediate reward for the selected command output; and
      - adapting (S11) the policy (6) in dependence of an interaction history associated with the user (3), the selected command output and the immediate reward.

15. A computer program, comprising
executable instructions which, when executed by a processor (110; 111, 121), cause the processor (110; 111, 121) to perform the method (2) of claim 14.

**Patentansprüche**

1. Honigtopfeinheit (1),
   die zu Folgendem konfiguriert ist:

   Empfangen (S1) eines Befehls eines Benutzers (3); und
   Bestimmen (S2), ob eine Bewertung des empfangenen Befehls erforderlich ist;
   wobei die Honigtopfeinheit (1) ferner zu Folgendem konfiguriert ist, falls die Bewertung des empfangenen Befehls erforderlich ist:

   Veranlassen (S3) der Ausführung des empfangenen Befehls durch eine Anzahl gesteuerter Backend-Systeme (4);
   Abrufen (S4) eines ersten Satzes von Befehlsausgaben, die mit dem empfangenen Befehl verknüpft sind, von den Backend-Systemen (4); und
   Füllen (S6) einer Wissensdatenbank (5) mit einem Eintrag, der den empfangenen Befehl und den abgerufenen ersten Satz von Befehlsausgaben enthält; und
   wobei die Honigtopfeinheit (1) ferner zu Folgendem konfiguriert ist:

   Abrufen (S7) eines zweiten Satzes von Befehlsausgaben, die mit dem empfangenen Befehl verknüpft sind, aus der Wissensdatenbank (5);
   Auswählen (S8) einer Befehlsausgabe aus dem abgerufenen zweiten Satz von Befehlsausgaben in Abhängigkeit von einer Richtlinie (6), die darauf abzielt, eine Wertfunktion zu maximieren;
   Ausgeben (S9) der ausgewählten Befehlsausgabe an den Benutzer (3);
   Bestimmen (S10) einer unmittelbaren Belohnung, die mit der ausgewählten Befehlsausgabe verbunden ist; und
   Anpassen (S11) der Richtlinie (6) in Abhängigkeit von einem mit dem Benutzer (3) verknüpften Interaktionsverlauf, der ausgewählten Befehlsausgabe und der unmittelbaren Belohnung.

2. Honigtopfeinheit (1) nach Anspruch 1,
   die ferner zu Folgendem konfiguriert ist:
   Anpassen (S11) die Richtlinie (6) basierend auf bestärkendem Lernen.

3. Honigtopfeinheit (1) nach Anspruch 2,
   wobei das bestärkende Lernen, Q-Lernen umfasst.

4. Honigtopfeinheit (1) nach einem der vorhergehenden Ansprüche,

   wobei die Richtlinie (6) einen erwarteten Wert einer Gesamtbelohnung für die ausgewählte Befehlsausgabe auf der Grundlage des mit dem Benutzer (3) verbundenen Interaktionsverlaufs definiert; und
   die Wertfunktion eine Summe unmittelbarer Belohnungen umfasst, die mit dem Interaktionsverlauf verbunden sind.

5. Honigtopfeinheit (1) nach Anspruch 4,
   ferner dazu konfiguriert, die Richtlinie (6) anzupassen (S11):
   Aktualisieren (S111) des erwarteten Werts der Gesamtbelohnung für die ausgewählte Befehlsausgabe in Abhängigkeit vom Interaktionsverlauf, der ausgewählten Befehlsausgabe und der unmittelbaren Belohnung.

6. Honigtopfeinheit (1) nach einem der vorhergehenden Ansprüche,
   wobei der Interaktionsverlauf einen oder mehrere der zuletzt empfangenen Befehle umfasst, die mit dem Benutzer verknüpft sind (3).

7. Honigtopfeinheit (1) nach einem der vorhergehenden Ansprüche,
   wobei die unmittelbare Belohnung mindestens eines der Folgenden umfasst:

   einen negativen ersten Wert bei abgebrochener Interaktion mit dem Benutzer (3);
   einen positiven zweiten Wert bei fortgesetzter Interaktion mit dem Benutzer (3); und
   einen positiven dritten Wert, wenn der empfangene Befehl nicht in der Wissensbasis enthalten ist (5).

8. Honigtopfeinheit (1) nach einem der vorhergehenden Ansprüche,
wobei die Befehlsbewertung ist erforderlich, wenn der empfangene Befehl nicht in der Wissensbasis enthalten ist (5).

9. Honigtopfeinheit (1) nach Anspruch 8,
wobei die Befehlsbewertung erforderlich ist, wenn der empfangene Befehl nicht mit mindestens einer Befehlsausgabe verknüpft ist, für die die Belohnung einen Schwellenwert überschreitet.

10. Honigtopfeinheit (1) nach Anspruch 9,
wobei die Befehlsbewertung erforderlich ist, wenn die mindestens eine zugehörige Befehlsausgabe eine Aktualisierung entsprechend einer Aktualisierungswahrscheinlichkeit erfordert.

11. Honigtopfeinheit (1) nach einem der vorhergehenden Ansprüche,
ferner dazu konfiguriert, die Ausführung des empfangenen Befehls zu veranlassen (S3):

    Klassifizieren (S31) des empfangenen Befehls; und
    Veranlassen (S32) der Ausführung des empfangenen Befehls durch die Anzahl der gesteuerten Backend-Systeme (4) entsprechend der Klassifizierung.

12. Honigtopfeinheit (1) nach Anspruch 11,
ferner dazu konfiguriert, den empfangenen Befehl zu klassifizieren (S31):
Klassifizieren (S31) des empfangenen Befehls in eines oder mehrere der Folgenden:

    ein Befehl eines UNIX-Computersystems;
    ein Befehl eines Windows-Computersystems;
    ein Befehl eines Netzwerk-Routing-Systems; und
    ein Befehl einer IdD-Vorrichtung.

13. Honigtopfeinheit (1) nach einem der vorhergehenden Ansprüche,
die ferner zu Folgendem konfiguriert ist:
Vorschlagen (S5) die Funktionalität der Anzahl gesteuerter Backend-Systeme (4) zu verbessern, die auf den abgerufenen ersten Satz von Befehlsausgaben reagieren, der null Befehlsausgaben umfasst.

14. Verfahren (2) zum Betreiben einer Honigtopfeinheit (1), wobei das Verfahren (2) Folgendes umfasst:

    Empfangen (S1) eines Befehls eines Benutzers (3); und
    Bestimmen (S2), ob eine Bewertung des empfangenen Befehls erforderlich ist;
    wobei das Verfahren (2) ferner Folgendes umfasst, wenn die Bewertung des empfangenen Befehls erforderlich ist:

        Veranlassen (S3) der Ausführung des empfangenen Befehls durch eine Anzahl gesteuerter Backend-Systeme (4);
        Abrufen (S4) eines ersten Satzes von Befehlsausgaben, die mit dem empfangenen Befehl verknüpft sind, von den Backend-Systemen (4); und
        Füllen (S6) einer Wissensdatenbank (5) mit einem Eintrag, der den empfangenen Befehl und den abgerufenen ersten Satz von Befehlsausgaben enthält;
        Verfahren nach Anspruch (2), ferner umfassend:

            Abrufen (S7) eines zweiten Satzes von Befehlsausgaben, die mit dem empfangenen Befehl verknüpft sind, aus der Wissensdatenbank (5);
            Auswählen (S8) einer Befehlsausgabe aus dem abgerufenen zweiten Satz von Befehlsausgaben in Abhängigkeit von einer Richtlinie (6), die darauf abzielt, eine Wertfunktion zu maximieren;
            Ausgeben (S9) der ausgewählten Befehlsausgabe an den Benutzer (3);
            Bestimmen (S10) einer sofortigen Belohnung für die ausgewählte Befehlsausgabe; und
            Anpassen (S11) der Richtlinie (6) in Abhängigkeit von einem mit dem Benutzer (3) verknüpften Interaktionsverlauf, der ausgewählten Befehlsausgabe und der unmittelbaren Belohnung.

15. Computerprogramm, umfassend
vom Prozessor (110; 111, 121) ausführbare Anweisungen, die, wenn sie auf einem Prozessor (110; 111, 121) ausgeführt werden, bewirken, dass der Prozessor das Verfahren nach Anspruch 14 durchführt.

**Revendications**

1. Entité pot de miel (1),

   étant configurée pour :

   - recevoir (S1) une commande d'un utilisateur (3) ; et
   - déterminer (S2) si une évaluation de la commande reçue est requise ;

   l'entité pot de miel (1) étant également configurée pour, si l'évaluation de la commande reçue est requise :

   - organiser (S3) l'exécution de la commande reçue par un certain nombre de systèmes dorsaux contrôlés (4) ;
   - récupérer (S4) un premier ensemble de sorties de commande associées à la commande reçue des systèmes dorsaux (4) ; et
   - remplir (S6) une base de connaissances (5) avec une entrée comportant la commande reçue et le premier ensemble de sorties de commande récupéré ; et

   l'entité pot de miel (1) est également configurée pour :

   - récupérer (S7) un second ensemble de sorties de commande associées à la commande reçue à partir de la base de connaissances (5) ;
   - sélectionner (S8) une sortie de commande du second ensemble de sorties de commande récupéré en fonction d'une politique (6) qui cherche à maximiser une fonction de valeur ;
   - sortir (S9) la sortie de commande sélectionnée à l'utilisateur (3) ;
   - déterminer (S10) une récompense immédiate associée à la sortie de commande sélectionnée ; et
   - adapter (S11) la politique (6) en fonction d'un historique d'interaction associé à l'utilisateur (3), de la sortie de commande sélectionnée et de la récompense immédiate.

2. Entité pot de miel (1) selon la revendication 1,
   également configurée pour :
   adapter (S11) la politique (6) basée sur l'apprentissage par renforcement.

3. Entité pot de miel (1) selon la revendication 2,
   l'apprentissage par renforcement comprenant le Q-learning.

4. Entité pot de miel (1) selon l'une quelconque des revendications précédentes,

   la politique (6) définissant une valeur attendue d'une récompense totale pour la sortie de commande sélectionnée compte tenu de l'historique d'interaction associé à l'utilisateur (3) ; et
   la fonction de valeur comprenant une somme de récompenses immédiates associées à l'historique d'interaction.

5. Entité pot de miel (1) selon la revendication 4,
   étant également configurée pour, de manière à adapter (S11) la politique (6) :

   - mettre à jour (S111) la valeur attendue de la récompense totale pour la sortie de commande sélectionnée en fonction de l'historique d'interactions, de la sortie de commande sélectionnée et de la récompense immédiate.

6. Entité pot de miel (1) selon l'une quelconque des revendications précédentes,
   l'historique d'interaction comprenant une ou plusieurs commandes reçues les plus récentes associées à l'utilisateur (3).

7. Entité pot de miel (1) selon l'une quelconque des revendications précédentes,
   la récompense immédiate comprenant au moins l'un des éléments suivants :

   - une première valeur négative lors d'une interaction discontinue avec l'utilisateur (3) ;

EP 4 396 709 B1

- une deuxième valeur positive lors d'une interaction continue avec l'utilisateur (3) ; et
- une troisième valeur positive si la commande reçue n'est pas incluse dans la base de connaissances (5).

8. Entité pot de miel (1) selon l'une quelconque des revendications précédentes,
   l'évaluation de la commande étant requise si la commande reçue n'est pas incluse dans la base de connaissances (5).

9. Entité pot de miel (1) selon la revendication 8,
   l'évaluation de la commande étant requise si la commande reçue n'est pas associée à au moins une sortie de commande pour laquelle la récompense dépasse un seuil.

10. Entité pot de miel (1) selon la revendication 9,
    l'évaluation de commande étant requise si au moins une sortie de commande associée nécessite un rafraîchissement conformément à une probabilité de rafraîchissement.

11. Entité pot de miel (1) selon l'une quelconque des revendications précédentes,
    étant également configurée pour, de manière à organiser (S3) l'exécution de la commande reçue :

    - classer (S31) la commande reçue ; et
    - organiser (S32) l'exécution de la commande reçue par le nombre de systèmes dorsaux contrôlés (4) conformément à la classification.

12. Entité pot de miel (1) selon la revendication 11,

    étant également configurée pour, de manière à classer (S31) la commande reçue :

    - classer (S31) la commande reçue dans une ou plusieurs des catégories suivantes :

        - une commande d'un système informatique UNIX ;
        - une commande d'un système informatique Windows ;
        - une commande d'un système de routage réseau ; et

    une commande d'un appareil IoT.

13. Entité pot de miel (1) selon l'une quelconque des revendications précédentes,
    également configurée pour :

    - suggérer (S5) d'améliorer une fonctionnalité du nombre de systèmes dorsaux contrôlés (4) sensibles au premier ensemble récupéré de sorties de commande comprenant zéro sortie de commande.

14. Procédé (2) de fonctionnement d'une entité pot de miel (1), le procédé (2) comprenant :

    - la réception (S1) d'une commande d'un utilisateur (3) ; et
    - le fait de déterminer (S2) si une évaluation de la commande reçue est requise ;
    le procédé (2) comprenant également, si l'évaluation de la commande reçue est requise :

        - l'organisation (S3) de l'exécution de la commande reçue par un certain nombre de systèmes dorsaux contrôlés (4) ;
        - la récupération (S4) d'un premier ensemble de sorties de commande associées à la commande reçue des systèmes dorsaux (4) ; et
        - le remplissage (S6) d'une base de connaissances (5) avec une entrée comportant la commande reçue et le premier ensemble de sorties de commande récupéré ;

    le procédé (2), comprenant également :

        - la récupération (S7) d'un second ensemble de sorties de commande associées à la commande reçue à partir de la base de connaissances (5) ;
        - la sélection (S8) d'une sortie de commande du second ensemble de sorties de commande récupéré en fonction d'une politique (6) qui cherche à maximiser une fonction de valeur ;

13

- la sortie (S9) de la sortie de commande sélectionnée à l'utilisateur (3) ;
- le fait de déterminer (S10) une récompense immédiate pour la sortie de commande sélectionnée ; et
- l'adaptation (S11) de la politique (6) en fonction d'un historique d'interaction associé à l'utilisateur (3), de la sortie de commande sélectionnée et de la récompense immédiate.

15. Programme informatique comprenant :

des instructions exécutables qui, lorsqu'elles sont exécutées par un processeur (110, 111, 121), amènent le processeur (110, 111, 121) à mettre en œuvre le procédé (2) selon la revendication 14.

FIG. 1

FIG. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 109831447

- CN 111079932